# EUROPEAN PATENT APPLICATION

(11) **EP 1 830 606 A2**
(43) Date of publication of application: **05.09.2007**
(21) Application number: 07002501.0
(22) Date of filing: 06.02.2007
(51) Int. Cl.: H05B 33/08

(54) **Backlighted push-button panel, particularly for intercommunication systems and video-communication systems**

(30) Priority: 02.03.2006 IT TO20060152
(71) Applicant: Urmet Domus S.p.A., 10154 Torino (IT)
(72) Inventor: Cavaliere, Mario Loris, 10040 Leini (TO) (IT); Cubito, Dario, 10070 San Francesco al Campo (TO) (IT)
(74) Representative: Spandonari, Carlo

(57) **Abstract**

The backlighted push-button panel has a plurality of call buttons (14, 24) associated with respective windows backlighted by respective illuminators (RGB 1-RGB6) each comprising three light sources of different colors which are controlled by a control unit (MPC, SPC) programmable to energize the light sources so that they emit average light intensities giving rise to an average overall light of a desired color.

## Description

The present invention relates to a backlighted push-button panel, particularly for intercommunication systems and video-communication systems.

As known, the intercommunication call stations generally comprise a push-button panel by which a user outside of a building may call one or more internal stations which, for instance, are located in respective apartments of the building. The push-button panel typically incorporates a microphone and a speaker which allow bidirectional communications between the external station and the internal station, as well as, in case of video-communication systems, a videocamera which is connected to respective monitors of which the internal stations are provided, in order to allow the users inside the building to identify the calling user.

The buttons each have an identification window associated therewith, which may be either incorporated in the button or arranged near it, and which bears the name corresponding to the respective button. The windows are backlighted to allow the names to be visible even in conditions of low light or in the dark.

The conventional backlighting systems make use of incandescent lamps or LEDs (light emitting diodes). These backlighting systems have the drawback that the color of the light is fixed and depends on the type of lamp or the color of the LED. For instance, a traditional incandescence lamp typically generates an orange-yellow light, with an incandescence temperature of about 2700 °K. In case of LEDs, green, yellow, yellow-green, and blue are the most widespread colors.

Therefore, it is a main object of the present invention to provide a backlighted push-button panel, particularly for intercommunication system and video-communication systems, in which the color of the light may be programmed in an automatized way during the installation or later, with a wide range of selectable colors and color shades.

It is another object of the invention to reduce the overall electrical input in order to prevent the formation of spurious currents which can affect the operation of the other devices incorporated in the push-button panel, particularly the videocamera.

The above objects and other advantages, which will better appear below, are achieved by the push-button panel having the features recited in claim 1, while the dependent claims state other advantageous, though secondary features of the invention.

The invention will be now described in more detail, with reference to a preferred, non-exclusive embodiment shown by way of non-limiting example in the attached drawings, wherein:
Fig. 1 is a front view of a general video-communication push-button panel;
Fig. 2 is a block diagram of the push-button panel of Fig. 1 with incorporated a lighting system according to the invention;
Figs. 3, 4 are two diagrams showing the curret signal feeding the lighting system of the push-button panel of Fig. 2 as varying over time, in a configuration which generates a white light;
Figs. 5, 6 are two diagrams similar to Figs. 3, 4, but in a configuration which generates a generally colored light different from a white light.

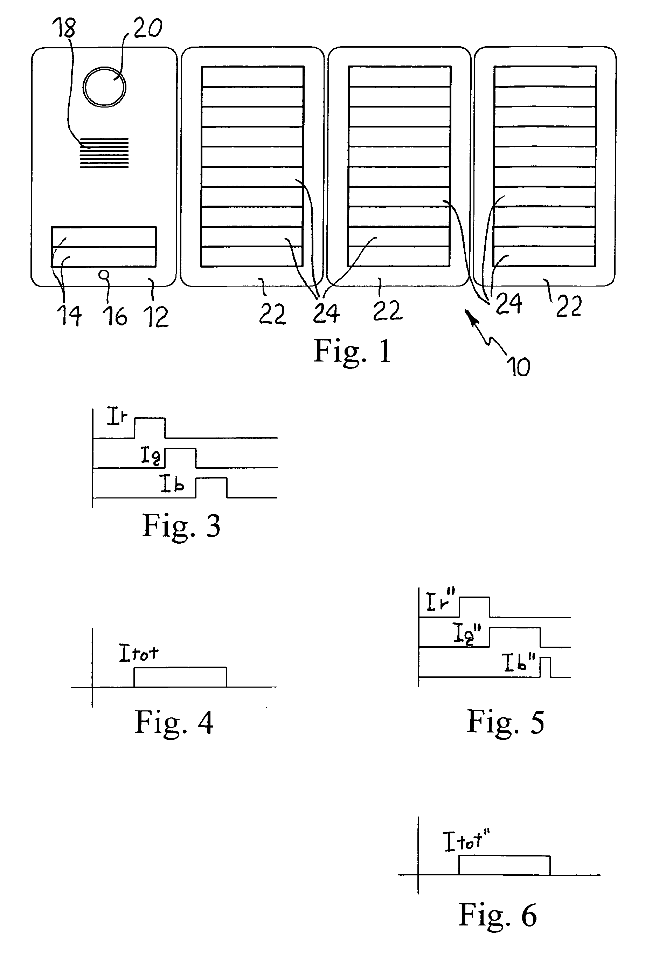

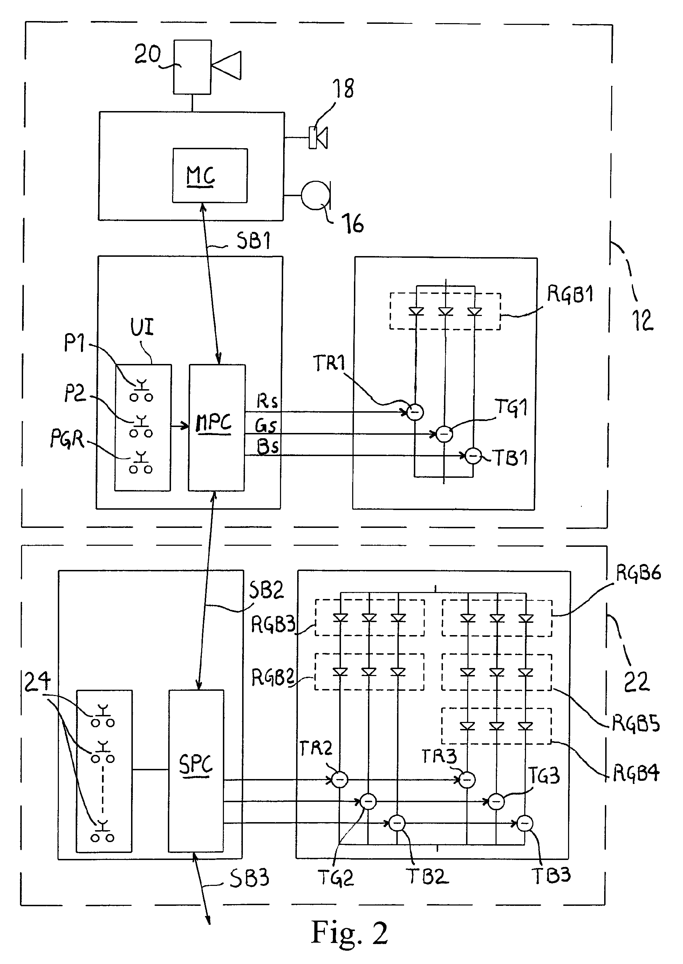

With initial reference to Fig. 1, a video-communication call station comprises a push-button panel 10 which includes a main unit 12 provided with two call buttons 14. Main unit 12 incorporates a microphone 16 and a speaker 18 which allow bidirectional communications between the call station and a general receiving station (not shown), as well as a camera 20 connected to respective monitors of which the internal stations are provided, in order to allow the receiving user to identify the calling user. Main unit 12 has a plurality of secondary units 22 each provided with a plurality of call buttons 24. Call buttons of main unit 12 and of secondary unit 22 are each shaped as a transparent rectangular window on which the name associated to the corresponding call button can be applied, for instance in the shape of a label arranged on the inner side of the window.

Fig. 2 illustrates a block diagram of a push-button panel of the type shown in Fig. 1, which incorporates a push-button backlighting system which allows the names to be visible even in conditions of low light or in the dark, as well as, according to the invention, the color of the light to be changed in an automatized way, with a wide range of selectable colors and color shades.

Having now particular reference to Fig. 2, main unit 12 according to the invention comprises a main pilot controller MPC which is connected to send pilot signals Rs, Gs, Bs concerning the three primary colors, i.e., red, green and blue, to a first triad of transistors TR1, TG1, TB1. Trantistors TR1, TG1, TB control a first RGB-type LED, RGB1, which is arranged within main unit in such a way as to illuminate both the call buttons 14. As known, the RGB-type LEDs comprise three diode elements each having a respective primary color and each energizable independently from the other elements. In particular, the transistors are each connected to control that diode element which generates a light of the color corresponding to the signal transmitted by the transistor. Main pilot controller MPC communicates with a master microcontroller MC via a first serial bus SB1. Master microcontroller MC has color informations stored therein which can be called up during programming, as will be better described below. Main unit 12 is also provided with a user interface UI connected to main pilot controller MPC and comprising a setup button PGR and a pair of programming buttons P1, P2. Advantageously, the functions of programming buttons P1, P2 are assigned to said call buttons 14 incorporated in main unit 12. Secondary units 22 each comprise a secondary pilot controller SPC connected to exchange data with main pilot controller MPC via a second serial bus SB2, as well as to send pilot signals concerning the three primary colors to a second triad of transistors TR2, TG2, TB2 and to a third triad of transistors TR3, TG3, TB3, on the basis of the informations received from secondary pilot control SPC. The second and third triad of transistors respectively pilot a pair of RGB-type LEDs connected in series, RGB2, RGB3, and a triad of RGB-type LEDs which are also connected in series, RGB4, RGB5, RGB6, at the same way as described above in relation to the first triad of transistors. The LEDs of the secondary unit are arranged within the latter in sucha way as each of them illuminates a pair of adjacent call buttons 24. Call buttons 24 incorporated in secondary unit 22 lead to secondary pilot controller SPC. Secondary pilot controller SPC is connectable to exchange signals with the secondary pilot controller of a subsequent identical secondary unit, via a third serial bus SB3. Main pilot controller MPC is programmed to energize the LED elements with pulses having a duration shorter than the persistence of vision. Due to the high frequency of the pulses, the light flashes emitted by the LED elements generate a light which appears as substantially constant to the user.

The current pulses to the respective sources have equal amplitudes and are modulated by duration in order to obtain different colors and color shades. The color informations are stored in master controller MC and consist of different combinations of the durations of the three pulses. By way of example, Fig. 3 shows the current signals applied to the three LED elements in a cycle, as varying over time, with a combination which generates a white light. As shown in Fig. 3, this is obtained by subjecting the three LED elements to respective current pulses Ir, Ig, Ib having equal durations. Fig. 5 is similar to Fig. 3, but shows a combination which generates a light of another color than white, which is obtained by subjecting the blue LED element to short current pulses I"b, the green LED element to long current pulses I"g, and the red LED element to intermediate current pulses I"r. This combination will generate a color shade in which the green color will prevail.

As shown in Figs. 3, 5, main pilot controller MPC is programmed to generate current pulses having equal amplitudes and following one another without overlapping. This circumstance causes the overall electrical input to be constant along the cycle, as shown in Figs. 4, 6 wherein the overall current signal Itot, Itot" fed to the three LEDs in the two cases of Figs. 3 and 5 respectively is shown, as varying over time. This circumstance prevents the formation of spurious currents which can affect the operation of the other devices incorporated in the push-button panel, in particular the videocamera.

The RGB-type LEDs may be positioned within the unit at the same way as the monocromatic LEDs used in the traditional backlighted push-button panels, e.g., by using reflecting surfaces to direct the light from the LED to the two push-buttons assigned thereto, in a conventional way in the field.

A preferred embodiment of the invention has been described herein, but of course many changes may be made by a person skilled in the art within the scope of the inventive concept. In particular, the use of RGB-type LEDs is to be intended as preferred but not indispensable to carry out the invention, because other types of illuminators can be used, such as illuminators consisting of a plurality of independent light sources having different colors and arranged side-by-side, for instance three monocromatic LEDs. Of course, the number of LEDs used for lighting the units of the push-button panel, as well as the number of triads of transistors which feed the LED, can be changed depending on the requirements.

## Claims

1. Backlighted push-button panel, particularly for intercommunication systems and video-communication systems, comprising a plurality of call buttons (14, 24) associated with respective windows backlighted by respective illuminators, **characterized in that** said illuminators (RGB1-RGB6) each comprise at least two light sources of different colors which are controlled by a control unit (MPC, SPC) programmable to energize said light sources so that they emit average light intensities giving rise to an average overall light of a desired color.

2. The push-button panel of claim 1, **characterized in that** said control unit (MPC, SPC) is programmed to energize the light sources with pulses having a duration shorter than the persistence of vision.

3. The push-button panel of claim 2, **characterized in that** the current pulses (Ir, Ig, Ib, Ir", Ig", Ib") to the respective light sources have equal amplitudes and **in that** the durations of the current pulses are modulated to provide a desired average light of the desired color.

4. The push-button panel of claim 3, **characterized in that** said control unit (MPC, SPC) has a plurality of color information stored therein to be called up during programming for controlling said illuminators, each information consisting of a specific combination of the durations of the current pulses (Ir, Ig, Ib, Ir", Ig", Ib") feeding the light sources.

5. The push-button panel of any of claims 2 to 4, **characterized in that** the current pulses (Ir, Ig, Ib, Ir", Ig", Ib") feeding the respective light sources follow one another without overlapping.

6. The push-button panel of any of claims 2 to 5, **characterized in that** said light sources are fed by respective transistors (TR1, TG1, TB1) piloted by respective pilot signals (Rs, Gs, Bs) from said control unit.

7. The push-button panel of any of claims 1 to 6, **characterized in that** said illuminators (RGB 1-RGB6) each comprise three light sources of respective primary colors.

8. The push-button panel of claims 7, **characterized in that** said illuminators are RGB-type LEDs, each of said light sources consisting of an element of the RGB-type LED.

9. The push-button panel of any of claims 1 to 8, **characterized in that** it comprises a user interface (UI) connected to the main pilot controller (MPC) to select a desired color.

10. The push-button panel of claim 9, **characterized in that** said user interface (UI) comprises an setup button (PGR) and a pair of programming buttons (P1, P2) whose functions are performed by two of said call buttons (14) incorporated in the push-button panel.
